# EUROPEAN PATENT SPECIFICATION

(11) **EP 1 583 352 B1**
(45) Date of publication and mention of the grant of the patent: **31.10.2007**
(21) Application number: 04019325.2
(22) Date of filing: 13.08.2004
(51) Int. Cl.: H04N 5/225, H05K 1/18, H05K 7/02, G03B 17/28

(54) **Digital camera module having a stack structure**
Digitalkamera-Modul mit einer Stapelstruktur
Appareil photo numérique modulaire à structure empilée

(30) Priority: 02.04.2004 CN 04260911 U
(43) Date of publication of application: 05.10.2005
(73) Proprietor: Teco Image System Co., Ltd., Taipei 104 (TW)
(72) Inventor: Graham, Luke A., Taoyuan Hsien, 328 (TW)
(74) Representative: UEXKÜLL & STOLBERG

(56) References cited:
- US-A- 5 221 964
- US-A- 6 011 661
- US-A1- 2003 146 998
- PATENT ABSTRACTS OF JAPAN vol. 017, no. 587 (E-1453), 26 October 1993 (1993-10-26) -& JP 05 176208 A (SONY CORP), 13 July 1993 (1993-07-13)
- PATENT ABSTRACTS OF JAPAN vol. 1999, no. 04, 30 April 1999 (1999-04-30) -& JP 11 017996 A (MATSUSHITA ELECTRON CORP), 22 January 1999 (1999-01-22)

## Description

### BACKGROUND OF THE INVENTION

The present invention relates in general to an optical module, and more particularly, to a stack structure of various devices applied in an electronic apparatus having a camera. The stack structure greatly reduces the exterior dimension of the optical module.

The development and advancement of information techniques has speeded up integration of electronic products, particularly the integration of small-size digital camera and the cellular phone. With the assistance of the peripheral system and support, the image is quickly transmitted and developed. Therefore, cellular phones with the built-in camera have become more and more popular. However, as the cellular phones become smaller and smaller, how to equivalently shrink the optical module has become an important topic in industry.

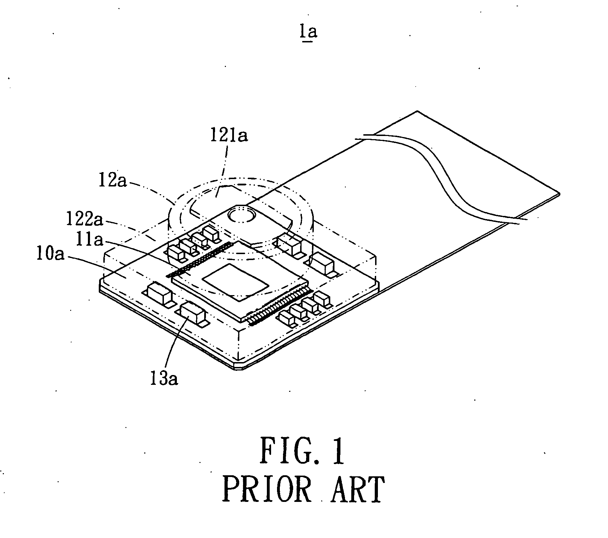

Figure 1 shows a conventional optical module 1a. The optical module 1a includes a circuit board 10a, a photodetector 11a, and a lens stage 12a. The photodetector 11a includes a charge coupled device (CCD) or a CMOS sensor, for example. Various electronic devices 13a, such as resistors, capacitors and chips, are disposed around the photodetector 11a. The lens stage 12a is formed on the circuit board 10a. The lens stage 12a includes an optical lens 121a and a receiving chamber 122a which is used to accommodate the electronic devices 13a and the photodetector 11a therein. The area of the bottom surface of the lens stage 12a is the same as the area of the circuit board 10a. Thereby, an optical module is assembled.

The photodetector 11a and the electronic devices 13a of the above optical module 1a are directly mounted on the circuit board 10a, such that a majority portion of the circuit board 10a is occupied. As a result, the dimension of the circuit board 10a cannot be reduced, and the overall size of the optical module 1a cannot be reduced effectively.

JP 05176208 relates to the ultraminiaturization of a camera by forming a peripheral circuit to a package with a CCD mounted thereon and placing on optical lens in front of the CCD.

JP 11017996 discloses a one-package module image pickup unit for a notebook personal computer or a cellular phone, having a CCD chip and a peripheral circuit element stored in a container, the top of which is provided with an optical filter. Further, a lens holder is provided for holding an optical diaphragm and a lens.

### SUMMARY OF THE INVENTION

The present invention provides an optical module using an insulator to isolate the photodetector and the electronic devices stacked with each other. Thereby, the area occupied by the photodetector is greatly reduced, and the overall size of the optical module is reduced too.

The optical module provided by the present invention is suitable for use in an electronic apparatus having a camera. The optical module includes a circuit board, a photodetector and a lens stage. The circuit board includes various types of electronic devices formed thereon. The photodetector is disposed over the electronic devices and in electric communication with the circuit board. A spacer is disposed between the photodetector and the circuit board. The circuit board allows the lens stage mounted thereon. The lens stage includes an optical lens and a receiving chamber for accommodating the photodetector and the electronic devices therein.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRIPTION OF ACCOMPANIED DRAWINGS

The above objects and advantages of the present invention will be become more apparent by describing in detail exemplary embodiments thereof with reference to the attached drawings in which:
Figure 1 shows a conventional optical module;
Figure 2 is an exploded view of an optical module in one embodiment of the present invention;
Figure 3 is a perspective view of the optical module as shown in Figure 2;
Figure 4 is a cross sectional view of the optical module as shown in Figure 2;
Figure 5 shows another embodiment of optical module; and
Figure 6 shows another embodiment of optical module.

### DETAILED DESCRIPTION OF EMBODIMENT

Reference will now be made in detail to the preferred embodiments of the present invention, examples of which are illustrated in the accompanying drawings. Wherever possible, the same reference numbers are used in the drawings and the description to refer to the same or like parts.

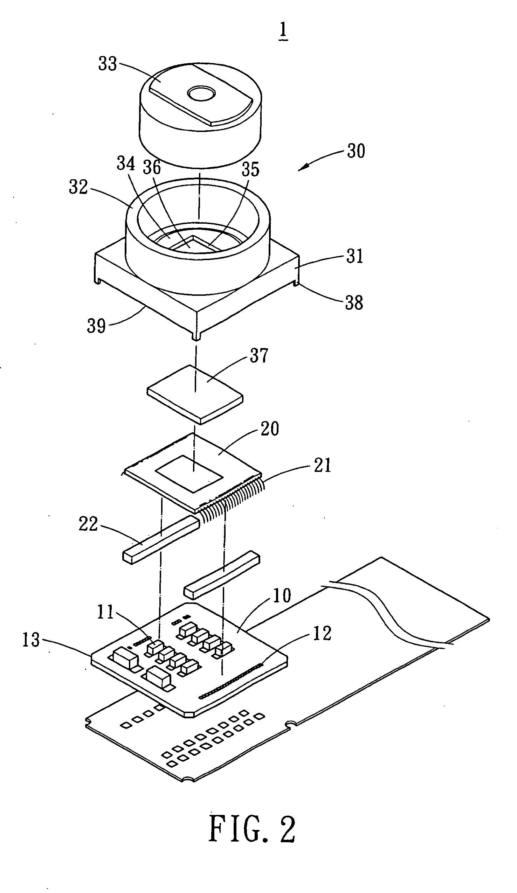

As shown in Figures 2, 3 and 4, the exploded view, perspective view and cross-sectional view of an optical module are illustrated. The optical module can be applied to a cellular phone, camera, a personal computer, a toy, or a distance sensor for a vehicle that has a built-in camera. The optical module 1 includes a circuit board 10, a photodetector 20 and a lens stage 30.

The circuit board 10 is preferably fabricated into a rectangular board from non-conductive material. The bottom surface of the circuit board 10 includes a flex cable electrically connected to a connection plug or connector and various electronic devices 11 such as resistors, capacitors and chips formed on a top surface thereof. A plurality of holes 12 may be formed in predetermined area of the circuit board 10, and slanting surfaces 13 are preferably formed at four corners of the circuit board 10.

The photodetector 20 includes a charge coupled device (CCD), a CMOS sensor, or other optical sensitive devices, for example. A plurality of wire bonds 21 is formed at two sides of the photodetector 20. The wire bonds 21 can be connected to the holes 12 to be in electric communication with the circuit board 10. A spacer 22 is disposed between the photodetector 20 and the circuit board 10, such that the photodetector 20 can be located right over the electronic devices 11 and further alleviate routing difficulties in the circuit board layout. To maintain tight dimensional control, the spacer 22 can be fabricated from ceramic material, for example. The spacer 22 can be adhered to the bottom surface of the photodetector 20. The spacer 22 is in the form of an elongate rectangular strip, cylinder or other geometric shape.

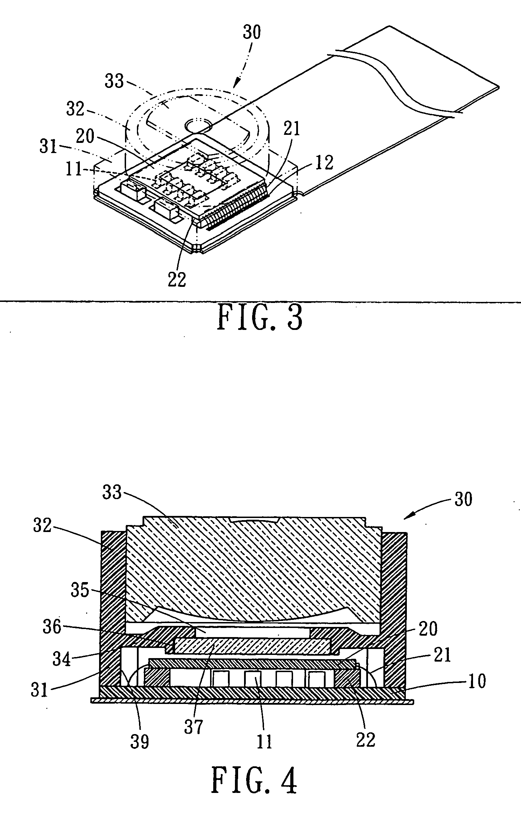

The lens stage 30 includes a rectangular frame 31 and a circular frame 32 connected to each other by a divider 34. As shown in Figure 4, the circular frame 32 is used to retain an optical lens 33 over the rectangular frame 31. The divider 34 includes a through hole 35 and a rectangular slot 36 under the through hole 35. The slot 36 allows a visible light filter 37 disposed thereon. Preferably, the slot 36 is larger than the through hole 35. The rectangular frame 31 further comprises four positioning legs 38 extending downwardly from four corners thereof. Each of the positioning legs 38 includes an internal slanting surface and the distance between the positioning legs 38 corresponds to the distance between the slanting surfaces ' 13 of the circuit board 10, such that the lens stage can be stably mounted on the circuit board 10. The rectangular frame 31 forms a receiving chamber 39 for accommodating the electronic devices 11 and the photodetector 20. Preferably, the bottom area of the rectangular frame 31 is about the same of the circuit board 10. Thereby, the optical module 1 is assembled.

To integrate the circuit board 10 and the photodetector 20, the top surface of the spacer 22 may be coated with glue, such that the top surface of the spacer 22 can be attached to the bottom surface of the photodetector 20. Glue may be applied to a bottom surface of the spacer 22, such that the spacer 22 can be attached to the circuit board 10. Consequently, the photodetector 20 is mounted over the electronic devices 11. Meanwhile, the wire bonds 21 of the photodetector 20 are inserted into the holes 12 of the circuit board 10 to establish electric connection therewith. The positioning legs 38 are then engaged with the slanting surfaces 13 of the circuit board 10, such that the electronic devices 11 and the photodetector 20 are received within the receiving chamber 39.

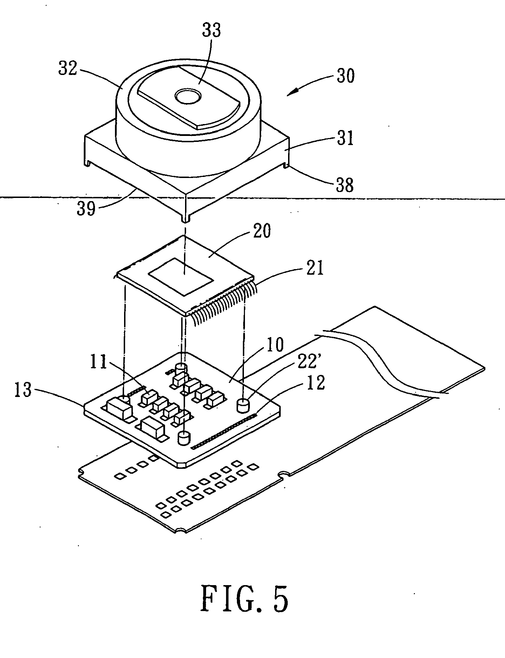

Figure 5 shows another embodiment of an optical module. As shown, the spacer 22' is in the form of a plurality of cylindrical pillars mounted on predetermined positions of the circuit board 10. The top surface of the spacer 22' is coated with glue to adhere the photodetector 20 thereto. Meanwhile, the wire bonds 21 of the photodetector 20 are inserted into the holes 12 to establish electric connection to the circuit board 10.

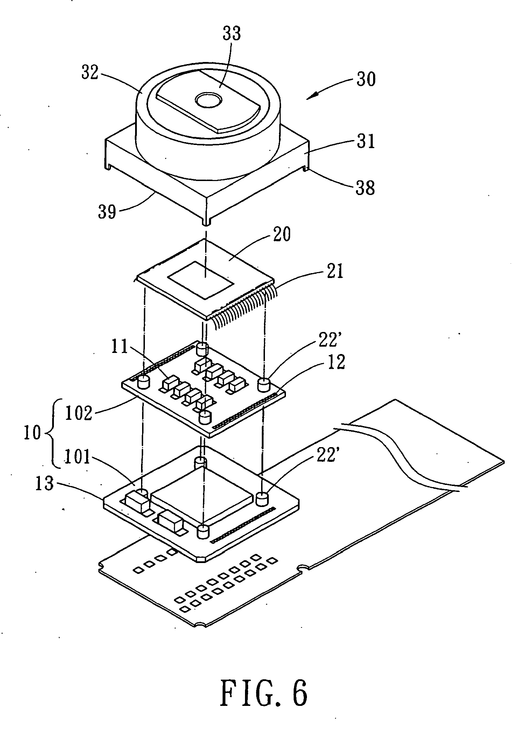

Figure 6 shows yet another embodiment of an optical module. In this embodiment, the circuit board 10 is an assembly of a first circuit board 101 and a second circuit board 102. A portion of the electronic devices such as chips is formed on the first circuit board 101, and the other portion of electronic devices 11 such as resistors and capacitors is formed on the second circuit board 102. Spacers 22' are disposed between the first and second circuit boards 101 and 102 and the photodetector 20 for insulation. The Spacer 22' may include two or more than two layers of insulation pillars or structures. Thereby, the area of the optical module 1 is further reduced.

Accordingly, the optical module provided in the above embodiments includes at least the following advantages. The spacer is used to stack the photodetector and the electronic devices, such that the area of the circuit board is greatly reduced. As a result, the external dimension of the optical module is reduced, and the portability of the electronic apparatus including a built-in camera is enhanced.

While the present invention has been particularly shown and described with reference to preferred embodiments thereof, it will be understood by those of ordinary skill in the art the various changes in form and details may be made therein without departing from the scope of the present invention as defined by the appended claims.

## Claims

1. An optical module (1) comprising a circuit board (10), a photodetector (20) and a lens stage (30), wherein said circuit board (10) comprises a plurality of electronic devices (11) formed thereon, said photodetector (20) is disposed over said electronic devices (11) and supported by a spacer (22,22') over said circuit board (10), and said lens stage (30) includes an optical lens (33) and a receiving chamber (39) mounted on said circuit board (10), said receiving chamber (39) is operative to receive said photodetector (20) and said electronic devices (11), **characterized in that** said spacer (22') includes four insulation blocks attached to four corners of a bottom surface of said photodetector (20).

2. The optical module as claimed in Claim 1, wherein said optical module (1) is used for a cellular phone including a built-in camera.

3. The optical module as claimed in Claim 1, wherein said-spacer (22,22') is fabricated from ceramic material.

4. The optical module as claimed in Claim 1, wherein said spacer (22,22') is adjacent to said circuit board (10) and said photodetector (20).

5. The optical module as claimed in Claim 1, wherein said spacer (22,22') is attached to a bottom surface of said photodetector (20).

6. The optical module as claimed in Claim 1, wherein said circuit board (10) includes an assembly of a first circuit board (101) and a second circuit board (102), and said spacer (22,22') is disposed between said photodetector (20) and said first circuit board (101) and between said first circuit board (101) and said second circuit board (102), respectively.

7. The optical module as claimed in Claim 1, wherein said lens stage (30) has a bottom surface equivalent to an area of said circuit board (10).

8. An optical module (1) comprising a circuit board (10), a photodetector (20) and a lens stage (30), wherein said circuit board (10) comprises a plurality of electronic devices (11) formed thereon, said photodetector (20) is disposed over said electronic devices (11) and supported by a spacer (22,22') over said circuit board (10), and said lens stage (30) includes an optical lens (33) and a receiving chamber (39) mounted on said circuit board (10), said receiving chamber (39) is operative to receive said photodetector (20) and said electronic devices (11), **characterized in that** said spacer (22) is an elongate rectangular strip.

9. An optical module (1) comprising a circuit board (10), a photodetector (20) and a lens stage (30), wherein said circuit board (10) comprises a plurality of electronic devices (11) formed thereon, said photodetector (20) is disposed over said electronic devices (11) and supported by a spacer (22,22') over said circuit board (10), and said lens stage (30) includes an optical lens (33) and a receiving chamber (39) mounted on said circuit board (10), said receiving chamber (39) is operative to receive said photodetector (20) and said electronic devices (11), **characterized in that** said spacer is an elongate cylinder.

## Patentansprüche

1. Optisches Modul (1) mit einer Schaltkreisplatine (10), einem Fotodetektor (20) und einer Linsenbaugruppe (30), wobei die Schaltkreisplatine (10) eine Vielzahl von elektronischen Vorrichtungen (11) aufweist, die daran vorgesehen sind, der Fotodetektor (20) über den elektronischen Vorrichtungen (11) angeordnet und durch ein Abstandsmittel (22, 22') über der Schaltkreisplatine (10) abstützend gehalten ist, die Linsenbaugruppe (30) eine optische Linse (33) und eine Aufnahmekammer (39) aufweist, die an der Schaltkreisplatine (10) montiert ist, und die Aufnahmekammer (39) ausgestaltet ist, um den Fotodetektor (20) und die elektronischen Vorrichtungen (11) aufzunehmen, **dadurch gekennzeichnet, dass** das Abstandsmittel (22') vier Isolationsblöcke aufweist, die an vier Ecken der unteren Fläche des Fotodetektors (20) angebracht sind.

2. Optisches Modul nach Anspruch 1, wobei das optische Modul (1) für ein Mobiltelefon mit einer eingebauten Kamera verwendet wird.

3. Optisches Modul nach Anspruch 1, wobei das Abstandsmittel (22, 22') aus einem keramischen Material hergestellt ist.

4. Optisches Modul nach Anspruch 1, wobei das Abstandsmittel (22, 22') benachbart der Schaltkreisplatine (10) und des Fotodetektors (20) vorgesehen ist.

5. Optisches Modul nach Anspruch 1, wobei das Abstandsmittel (22, 22') an einer unteren Fläche des Fotodetektors (20) angebracht ist.

6. Optisches Modul nach Anspruch 1, wobei die Schaltkreisplatine (10) eine Anordnung aus einer ersten Schaltkreisplatine (101) und einer zweiten Schaltkreisplatine (102) aufweist, und das Abstandsmittel (22, 22') zwischen dem Fotodetektor (20) und der ersten Schaltkreisplatine (101) bzw. zwischen der ersten Schaltkreisplatine (101) und der zweiten Schaltkreisplatine (102) angeordnet ist.

7. Optisches Modul nach Anspruch 1, wobei die Linsenbaugruppe (30) eine untere Fläche hat, die äquivalent zu einem Gebiet der Schaltkreisplatine (10) ist.

8. Optisches Modul (1) mit einer Schaltkreisplatine (10), einem Fotodetektor (20) und einer Linsenbaugruppe (30), wobei die Schaltkreisplatine (10) eine Vielzahl von elektronischen Vorrichtungen (11) aufweist, die daran vorgesehen sind, der Fotodetektor (20) über den elektronischen Vorrichtungen (11) angeordnet und durch ein Abstandsmittel (22, 22') über der Schaltkreisplatine (10) abstützend gehalten ist, die Linsenbaugruppe (30) eine optische Linse (33) und eine Aufnahmekammer (39) aufweist, die an der Schaltkreisplatine (10) montiert ist, und die Aufnahmekammer (39) ausgestaltet ist, um den Fotodetektor (20) und die elektronischen Vorrichtungen (11) aufzunehmen, **dadurch gekennzeichnet, dass** das Abstandsmittel (22) ein länglicher rechteckiger Streifen ist.

9. Optisches Modul (1) mit einer Schaltkreisplatine (10), einem Fotodetektor (20) und einer Linsenbaugruppe (30), wobei die Schaltkreisplatine (10) eine Vielzahl von elektronischen Vorrichtungen (11) aufweist, die daran vorgesehen sind, der Fotodetektor (20) über den elektronischen Vorrichtungen (11) angeordnet und durch ein Abstandsmittel (22, 22') über der Schaltkreisplatine (10) abstützend gehalten ist, die Linsenbaugruppe (30) eine optische Linse (33) und eine Aufnahmekammer (39) aufweist, die an der Schaltkreisplatine (10) montiert ist, und die Aufnahmekammer (39) ausgestaltet ist, um den Fotodetektor (20) und die elektronischen Vorrichtungen (11) aufzunehmen, **dadurch gekennzeichnet, dass** das Abstandsmittel ein länglicher Zylinder ist.

## Revendications

1. Module optique (1) comprenant une carte de circuit imprimé (10), un photodétecteur (20) et un étage de lentille (30), dans lequel ladite carte de circuit imprimé (10) comprend une pluralité de dispositifs électroniques (11) formés sur celle-ci, ledit photodétecteur (20) étant disposé au-dessus desdits dispositifs électroniques (11) et maintenu par une cale d'espacement (22, 22') au-dessus de ladite carte de circuit imprimé (10), et ledit étage de lentille (30) comprenant une lentille optique (33) et une chambre de réception (39) montée sur ladite carte de circuit imprimé (10), ladite chambre de réception (39) étant opérante pour recevoir ledit photodétecteur (20) et lesdits dispositifs électroniques (11), **caractérisé en ce que** ladite cale d'espacement (22') comprend quatre blocs d'isolation fixés à quatre coins d'une surface de fond dudit photodétecteur (20).

2. Module optique selon la revendication 1, dans lequel ledit module optique (1) est utilisé pour un téléphone cellulaire comprenant un appareil photo intégré.

3. Module optique selon la revendication 1, dans lequel ladite cale d'espacement (22, 22') est fabriquée en matériau céramique.

4. Module optique selon la revendication 1, dans lequel ladite cale d'espacement (22, 22') est adjacente à ladite carte de circuit imprimé (10) et audit photodétecteur (20).

5. Module optique selon la revendication 1, dans lequel ladite cale d'espacement (22, 22') est fixée à une surface de fond dudit photodétecteur (20).

6. Module optique selon la revendication 1, dans lequel ladite carte de circuit imprimé (10) comprend un ensemble d'une première carte de circuit imprimé (101) et une deuxième carte de circuit imprimé (102), et ladite cale d'espacement (22, 22') est disposée entre ledit photodétecteur (20) et ladite première carte de circuit imprimé (101) et entre ladite première carte de circuit imprimé (101) et ladite deuxième carte de circuit imprimé (102), respectivement.

7. Module optique selon la revendication 1, dans lequel ledit étage de lentille (30) comporte une surface de fond équivalente à une région de ladite carte de circuit imprimé (10).

8. Module optique (1) comprenant une carte de circuit imprimé (10), un photodétecteur (20) et un étage de lentille (30), dans lequel ladite carte de circuit imprimé (10) comprend une pluralité de dispositifs électroniques (11) formées sur celle-ci, ledit photodétecteur (20) étant disposé au-dessus desdits dispositifs électroniques (11) et maintenu par une cale d'espacement (22, 22') au-dessus de ladite carte de circuit imprimé (10), et ledit étage de lentille (30) comprenant une lentille optique (33) et une chambre de réception (39) montée sur ladite carte de circuit imprimé (10), ladite chambre de réception (39) étant opérante pour recevoir ledit photodétecteur (20) et lesdits dispositifs électroniques (11), **caractérisé en ce que** ladite cale d'espacement (22) est une bande rectangulaire allongée.

9. Module optique (1) comprenant une carte de circuit imprimé (10), un photodétecteur (20) et un étage de lentille (30), dans lequel ladite carte de circuit imprimé (10) comprend une pluralité de dispositifs électroniques (11) formés sur celle-ci, ledit photodétecteur (20) étant disposé au-dessus desdits dispositifs électroniques (11) et maintenu par une cale d'espacement (22, 22') au-dessus de ladite carte de circuit imprimé (10), et ledit étage de lentille (30) comprenant une lentille optique (33) et une chambre de réception (39) montée sur ladite carte de circuit imprimé (10), ladite chambre de réception (39) étant opérante pour recevoir ledit photodétecteur (20) et lesdits dispositifs électroniques (11), **caractérisé en ce que** ladite cale d'espacement est un cylindre allongé.
